# EUROPÄISCHE PATENTSCHRIFT

(11) **EP 3 553 410 B1**
(45) Veröffentlichungstag und Bekanntmachung des Hinweises auf die Patenterteilung: **22.03.2023**
(21) Anmeldenummer: 19166075.2
(22) Anmeldetag: 29.03.2019
(51) Int. Cl.: F24H 1/48, F24D 3/08, F24D 19/10, G05D 23/19

(54) **WARMWASSERBEREITER**
HOT WATER PREPARER
CHAUFFE-EAU

(30) Priorität: 30.03.2018 TR 201804463
(43) Veröffentlichungstag der Anmeldung: 16.10.2019
(73) Patentinhaber: Bosch Termoteknik Isitma ve Klima Sanayi Ticaret Anonim Sirketi, 45030 Manisa (TR)
(72) Erfinder: Konuk, Gokhan, 35030 Bornova/Izmir (TR)
(74) Vertreter: Bee, Joachim

(56) Entgegenhaltungen:
- EP-A1- 3 139 103
- EP-A1- 3 141 783
- EP-A1- 3 156 662
- DE-A1- 10 064 542
- DE-A1- 19 912 569

## Beschreibung

### TECHNISCHES GEBIET

Die Erfindung bezieht sich auf Warmwasserbereiter und insbesondere auf einen Warmwasserbereiter für den im Stand der Technik angegebenen Teil von Anspruch 1.

### VORHERIGER STAND DER TECHNIK

Die Warmwasserbereiter fördern das Wasser vom Einlass, danach werden sie einer Wärmequelle ausgesetzt, und vom Heißwasserauslass mittels einer Pumpe zum Heizungssystem gefördert. Warmwasserbereiter vom Kombityp können Warmwasser für Heizungskomponenten, wie Heizkörper, oder für Haushaltskomponenten, wie Wasserhähne, bereitstellen. Wenn das Umschaltventil die Position ändert, d. h. wenn die Warmwasserzuleitung von der Versorgung der Heizungshauptleitung zur Versorgung der Hausgebrauchsleitung übergeht und wenn die Pumpe weiterläuft, trifft das schnell fließende Wasser auf die internen Komponenten, wenn das Ventil seine Position ändert, wodurch ein Hammereffekt erzeugt wird. Der Hammereffekt reduziert die Ventillebensdauer und verursacht Geräusche.

Im Stand der Technik wird die Pumpe einige Zeit vor dem Positionswechsel des Ventils ausgeschaltet. Wenn die Pumpe ausgeschaltet ist, wird auch die Wärmequelle abgeschaltet, um das nicht abgegebene Wasser nicht zu überhitzen. Das Ventil kann seine Position ändern, nachdem darauf gewartet wird, dass sich das Wasser für eine Weile verlangsamt. Vor dem Ändern der Ventilstellung und in der Summe der Zeiten, in denen das Ventil seine Position ändert, wird das Wasser nicht erwärmt: der Benutzer erhält für diese Dauer und danach teilweise gekühltes und in der Strömungskraft reduziertes Wasser. Dies wirkt sich nachteilig auf die Nutzungserfahrung aus. Nachdem das Ventil seine Position geändert hat, werden Pumpe und Wärmequelle betrieben. Dies führt dazu, dass der Wasserstrom, der von den Komponenten für den Hausgebrauch fließt, in kurzer Zeit ansteigt, und dies wirkt sich negativ auf den Benutzer aus. Beispielsweise offenbart die Patentanmeldung DE 10064542 ein Verfahren zum Steuern eines Ventils, bei dem Wasser aus einer Quelle einer ersten Vorrichtung oder einer zweiten Vorrichtung zugeführt wird. Die EP3141783 offenbart eine Ventilvorrichtung, insbesondere Dreiwegeventilvorrichtung, mit zumindest einem Ventilelement, welches dazu vorgesehen ist, zumindest einen ersten Fluidstrom zu beeinflussen, und mit zumindest einer mit dem Ventilelement wirkschlüssig verbundenen mechanischen Aktoreinheit, welche dazu vorgesehen ist, eine Stellung des Ventilelements zu verändern. Es wird vorgeschlagen, dass die Aktoreinheit in zumindest einem Betriebszustand zumindest teilweise in einem Strömungsbereich eines zweiten Fluidstroms angeordnet und dazu vorgesehen ist, die Stellung des Ventilelements in Abhängigkeit vom zweiten Fluidstrom zu verändern. Die EP3156662 offenbart ein Pumpenaggregat, einem in dem Pumpengehäuse (16; 16') drehbar angeordneten Laufrad, einem mit dem Laufrad verbundenen elektrischen Antriebsmotor des Pumpengehäuses (16, 16') zumindest in einem Umfangsabschnitt in einem Umfangsbereich des Laufrades, der zumindest 1,4 mal und vorzugsweise zumindest 2 mal so groß wie der Radius des Laufrades ist, sowie ein hydraulisches System mit zumindest zwei hydraulischen Kreisen und einem solchen Pumpenaggregat, wobei das Ventil als Umschaltventil zwischen den zwei hydraulischen Kreisen ausgebildet ist.

Infolgedessen erforderten alle oben genannten Probleme Innovationen auf dem relevanten technischen Gebiet.

### KURZE BESCHREIBUNG DER ERFINDUNG

Die vorliegende Erfindung betrifft einen Warmwasserbereiter, um die oben genannten Nachteile zu überwinden und dem betreffenden technischen Gebiet neue Vorteile zu bringen.

Ein Zweck der Erfindung ist es, einen Warmwasserbereiter zu schaffen, bei dem der Temperaturabfall für den häuslichen Gebrauch verringert wird, indem der Hammereffekt während des Übergangs von dem Betriebszustand, in dem heißes Wasser für die Zentralheizung vorgesehen ist, in den Zustand, in dem heißes Wasser für den häuslichen Gebrauch bereitgestellt wird, verhindert wird.

Ein weiteres Ziel der Erfindung ist es, einen Warmwasserbereiter bereitzustellen, bei dem die Wartezeit für die Warmwasserzufuhr für den häuslichen Gebrauch während des Übergangs von dem Betriebszustand, in dem heißes Wasser für die Zentralheizung vorgesehen ist, in den Zustand, in dem heißes Wasser für den häuslichen Gebrauch bereitgestellt wird, zumindest teilweise reduziert wird.

Ein weiteres Ziel der Erfindung ist es, die Benutzererfahrung des Benutzers zu verbessern, der heißes Wasser für den Hausgebrauch während des Übergangs von dem Betriebszustand, in dem heißes Wasser für die Zentralheizung vorgesehen ist, in den Zustand, in dem heißes Wasser für den häuslichen Gebrauch bereitgestellt wird, verlangt.

Um alle vorgenannten Ziele und alle Aufgaben zu realisieren, die sich aus der folgenden detaillierten Beschreibung ergeben, stellt die vorliegende Erfindung eine Heizeinheit zum Erwärmen einer zentralen Heizleitung bereit, die mit mindestens einer zentralen Heizkomponente verbunden ist; einen Wärmeübertragungsarm, der einen Heißwasserauslassabschnitt der Heizleitung aus der Heizeinheit und einen Rückführungsteil, der von der Zentralheizungskomponente in die Heizeinheit eintritt, verbindet, um einen Wasserdurchgang zu ermöglichen; ein Umlenkventil, das sowohl funktioniert, um die Zirkulation von Wasser zwischen der Heizeinheit und dem Wärmetauscher sekundären Position zu ermöglichen, und als auch in einer Primärposition, um die Zirkulation von Wasser zwischen der Heizeinheit und den Komponenten der Zentralheizung zu ermöglichen; eine Pumpe, die es ermöglicht, dass Wasser durch die Zentralheizungsleitung fließt; und einen Warmwasserbereiter mit einer Steuereinheit, die die Heizeinheit, die Pumpe und das Umlenkventil im Hinblick auf die Heißwasseranforderungssignale, die von einem Sensor empfangen werden, kontrolliert. Dementsprechend ist die Innovation konfiguriert, die Pumpe mit einer niedrigeren Leistung für die Zeitdauer anzutreiben, in der die Steuereinheit das Warmwasseranforderungssignal empfängt und das Umlenkventil in die zweite Betriebsstellung übergeht. Wenn also das Ventil von der ersten Betriebsstellung in die zweite Betriebsstellung übergeht, wird der erste Teil des Wassers aus der zweiten Leitung zumindest teilweise wärmer und braucht der Benutzer weniger Zeit für den Zugriff auf heißes Wasser. Darüber hinaus wird verhindert, dass das Ventil einem Hammereffekt ausgesetzt wird.

Eine bevorzugte Ausführungsform der Erfindung ist dadurch gekennzeichnet, dass die Steuereinheit ferner konfiguriert ist, um zu ermöglichen, dass die Heizeinheit bis das Ventil in die zweite Betriebsstellung übergeht mit einer niedrigeren Leistung angetrieben wird, nachdem sie das Warmwasseranforderungssignal empfangen hat. Auf diese Weise wird verhindert, dass sich das Wasser im Wassertank aufgrund der Verlangsamung der Pumpe überhitzt, und die Wärme wird teilweise bewahrt, je nach der Situation, in der die Wärmequelle vollständig geschlossen ist.

Eine weitere bevorzugte Ausführungsform der Erfindung ist dadurch gekennzeichnet, dass die Steuereinheit konfiguriert ist, um eine Leistungsreduzierung mit einem PWM-Signal (Pulsbreitenmodulation) oder einem Spannungssignal durchzuführen. Dadurch wird sichergestellt, dass die Betriebsleistung der Pumpe und/oder der Wärmequelle kontrolliert reduziert wird.

Eine weitere bevorzugte Ausführungsform der Erfindung ist dadurch gekennzeichnet, dass die Steuereinheit dazu eingerichtet ist, die Pumpe und/oder die Heizeinheit mit einer schrittweise abnehmenden Kraft anzutreiben. Es wird verhindert, dass das Ventil einem Hammereffekt ausgesetzt wird.

Eine weitere bevorzugte Ausführungsform der Erfindung ist dadurch gekennzeichnet, dass die Steuereinheit dazu eingerichtet ist, die Pumpe und/oder die Heizeinheit mit einer gleichbleibenden Kraft anzutreiben.

Eine weitere bevorzugte Ausführungsform der Erfindung ist dadurch gekennzeichnet, dass die Steuereinheit konfiguriert ist, um das Umlenkventil nach einer bestimmten Zeit nach dem Start des Leistungsreduzierungsprozesses von der ersten Betriebsposition in die zweite Betriebsposition zu bringen. Somit wird der Hammereffekt verhindert, indem das Wasser, das sich bereits in der Heißwasserauslassleitung befindet und das mit hoher Geschwindigkeit fließt, die erste Wasserleitung vor dem Übergang in die zweite Betriebsposition verlässt.

In einer anderen bevorzugten Ausführungsform der vorliegenden Erfindung ist der Warmwasserbereiter ein Haushalts-Kombigerät.

In einer weiteren bevorzugten Ausführungsform der Erfindung ist der Warmwasserbereiter nach wie in den vorherigen Ansprüchen erwähnt dadurch gekennzeichnet, dass seine Steuereinheit konfiguriert ist, um die Betriebsleistung der Pumpe und/oder der Heizeinheit zu erhöhen.

Eine weitere bevorzugte Ausführungsform der Erfindung ist dadurch gekennzeichnet, dass die Steuereinheit dazu eingerichtet ist, die Pumpe und/oder die Heizeinheit mit einer schrittweise erhöhten Kraft anzutreiben.

### KURZE BESCHREIBUNG DER FIGUREN

Fig. 1 stellt ein repräsentatives Bild eines Heizungssystems dar, in dem der erfindungsgemäße Warmwasserbereiter vorgesehen ist.
Figur 2a zeigt ein repräsentatives Bild der ersten Betriebsstellung des Umlenkventils.
Figur 2b zeigt ein repräsentatives Bild der zweiten Betriebsstellung des Umlenkventils.

### DETAILLIERTE BESCHREIBUNG DER ERFINDUNG

In dieser detaillierten Beschreibung wird die erfindungsgemäße Heizvorrichtung durch Beispiele erläutert, die zum besseren Verständnis der Erfindung vorgesehen sind und nicht einschränkend wirken.

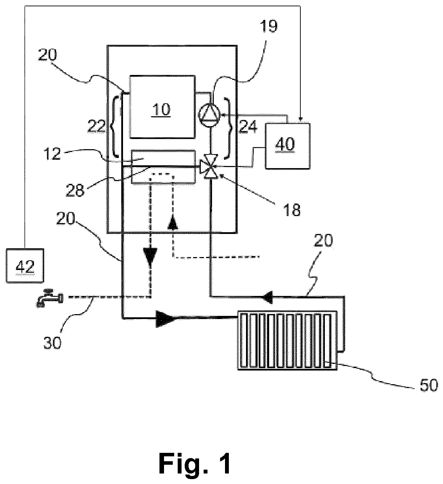

Mit Bezug auf Figur 1 ist der erfindungsgemäße Wassererhitzer (1) eine Kombitherme und umfasst eine Heizeinheit (10). Die Heizeinheit (10) ist einer zentralen Heizleitung (20) zugeordnet. Die Heizeinheit (10) sorgt für die Erwärmung des durch die Wellrohre strömenden Wassers. Die Heizeinheit (10) ist in diesem Ausführungsbeispiel eine heizgasbetriebene Heizung. Die zentrale Heizleitung (20) ist den Zentralheizungskomponenten (50), beispielsweise dem Heizkörper, zugeordnet. Der Teil der zentralen Heizleitung (20), der aus der Heizeinheit (10) austritt, wird als Heißwasserauslassabschnitt (22) definiert während der Teil, der in die Heizeinheit (10) eintritt, als Rückführungsteil (24) definiert wird.

Der Warmwasserbereiter (1) umfasst auch einen Wärmetauscher (12). Ein Wärmeübertragungsarm (28) ist vorgesehen, der den Heißwasserauslassabschnitt (22) der zentralen Heizleitung (20) und den Rückführungsteil (24) verbindet, um einen Wasserdurchgang dazwischen bereitzustellen. Der Wärmeübertragungsarm (28) ist dem Wärmetauscher (12) zugeordnet. Mit dem Wärmetauscher (12) ist auch eine Haushaltsgebrauchsleitung (30) verbunden, die mit Komponenten für den Haushaltsgebrauch, wie z. B. Wasserhähnen, verbunden ist. Der Wärmetauscher (120) ist angeordnet, um eine Wärmeübertragung zwischen dem Wärmeübertragungsarm (28) der zentralen Heizleitung (20) und der Haushaltsgebrauchsleitung (30) bereitzustellen.

Der Warmwasserbereiter (1) umfasst mindestens ein Dreiwegeventil (18). Das Umlenkventil (18) ist an der zentralen Heizleitung (20) vorgesehen. Genauer ist ein Ende des Ablenkventils (18) mit dem Rückführungsteil (24) der zentralen Heizleitung (20), ein Ende mit dem Wärmeübertragungsarm (28) der zentralen Heizleitung (20) verbunden, das andere Ende ist mit dem Abschnitt der zentralen Heizleitung (20) verbunden, der aus der zentralen Heizkomponente (50) austritt.

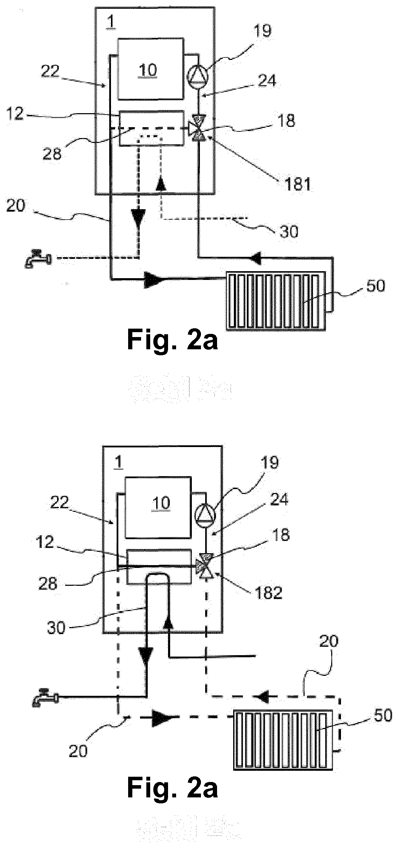

Das Umlenkventil (18) erreicht die Heizeinheit (10), die durch den Rückführungsteil (24) des von den Zentralheizungskomponenten (50) kommenden Wassers geht, und schließt das Teil, das sich auf den Wärmeübertragungsarm (28) bezieht in einer ersten Position (181) unter Bezugnahme auf Fig. 2a , tritt aus der Heizeinheit (10) aus und lässt es erneut durch die Zentralheizungskomponenten (50) zirkulieren. Mit anderen Worten wird es ermöglicht, dass das Wasser in der zentralen Heizungsleitung (20) zwischen den Zentralheizungskomponenten (50) und der Heizeinheit (10) zirkuliert.

Mit Bezug auf Fig. 2b verschließt er in einer zweiten Stellung (182) das andere Ende des Endes, das mit der Zentralheizungseinheit (10) verbunden ist, und durchläuft dadurch den Wärmetauscher (12) durch den Wärmeübertragungsarm (28) des Wassers, das den Heißwasserauslassabschnitt (22) durchläuft. Mit Hilfe des Rückführungsteils (24) kann es erneut zur Heizeinheit (10) gelangen.

Der Warmwasserbereiter (1) umfasst auch eine Pumpe (19), die einen Wasserstrom in der zentralen Heizleitung (20) bereitstellt. Die Pumpe (19) funktioniert gemäß dem von einer Steuereinheit (40) empfangenen Signal und lässt Wasser aus der zentralen Heizleitung (20) strömen. Die Pumpe (19) kann gemäß dem von der Steuereinheit (40) empfangenen Signal mit unterschiedlichen Drehzahlen betrieben werden. Mit anderen Worten kann die Pumpe (19) mit unterschiedlichen Spannungen oder mit unterschiedlichen Kräften betrieben werden. In dieser beispielhaften Ausführungsform kann die Pumpe (19) einen Steuerkreis (nicht dargestellt) aufweisen, der die dem Motor zugeführte Energie, d. h. die Spannung, und die Drehzahl ihrer Flügelräder einstellt. Da die Pumpe (19) im Stand der Technik gut bekannt ist, sind Komponenten wie Flügelrad, Steuerkreis und Motor in den Figuren nicht gezeigt.

Die Wärmeabgabe von der Heizeinheit (10) wird auch von der Steuereinheit (40) gesteuert. Die Wärmequelle (10) ändert auch die Wärmeabgabe der wärmeerzeugenden Komponenten entsprechend dem empfangenen Signal. In dieser beispielhaften Ausführungsform kann die Ausgangsintensität des Gases gemäß dem von der Steuereinheit (40) empfangenen Signal geändert werden.

Das Umlenkventil (18) wird ebenfalls von der Steuereinheit (40) gesteuert. Das Umlenkventil (18) kann eine elektronische Komponente (nicht dargestellt) umfassen, die, wie im Stand der Technik bekannt ist, eine mechanische Bewegung auslöst, die die Betriebsstellung relativ zu dem von der Steuereinheit (40) empfangenen Signal ändert.

Wenn der Warmwasserbereiter (1) der vorliegenden Erfindung den Bedarf an Brauchwarmwasserverbrauch in dem Heizungssystem bestimmt, wird die Steuereinheit (40) mit einem Sensor (30) versehen, der ein entsprechendes Warmwasseranforderungssignal sendet. Der Sensor (30) ist eine Turbine, die in diesem Ausführungsbeispiel die Strömung misst und dementsprechend Signale erzeugt.

Die Steuereinheit (40) kann genauer einen Mikroprozessor umfassen.

Die oben beschriebene Erfindung funktioniert auf folgende Weise. In einem ersten Fall, in dem die Zentralheizung durchgeführt wird, läuft das Ablenkventil (18) in der ersten Betriebsstellung (181) wie in Figur 2a . Die Steuereinheit (40) ermöglicht es der Heizeinheit (10) und der Pumpe (19), mit einer voreingestellten Leistung für die Zentralheizung zu laufen. Im ersten Fall wird das Wasser durch die Heizeinheit (10) erwärmt und das heiße Wasser tritt aus dem Auslassabschnitt (22) aus und gelangt zu den Komponenten des Zentralheizungssystems. Die Steuereinheit (40) kann ein Pulsbreitenmodulationssignal (PWM-Signal) an die Pumpe (19) und die Heizeinheit (16) senden.

In einem zweiten Fall, in dem beispielsweise Warmwasser für den häuslichen Gebrauch verwendet werden soll, erfasst der Sensor (30) den Warmwasserbedarf des Benutzers und sendet das Warmwasserbedarfssignal an die Steuereinheit (40). Der Bedarf an Warmwasser kann vom Benutzer durch Öffnen einer ventilartigen, hahnähnlichen Komponente für den häuslichen Gebrauch realisiert werden und der Sensor (42) erzeugt über den Wasserdurchfluss in der an die Haushaltskomponente angeschlossenen Leitung ein Warmwasserbedarfssignal. Die Steuereinheit (40) ermöglicht es der Pumpe (19), nach Empfang des Warmwasseranforderungssignals mit reduzierter Leistung zu laufen.

Genauer gesagt im vergleich zu die Steuereinheit (40) ein erstes Startsignal an die Pumpe (19), das sie anweist, mit niedrigerer Leistung zu laufen. Dieses erste Ansteuersignal ermöglicht, dass die Pumpe (19) mit einem Pulsweitenmodulationssignal (PWM) mit einem reduzierten Betriebszyklus als die erste Betriebsstellung betrieben wird.

Das erste Ansteuersignal ist ein Pulsweitenmodulationssignal oder ein Spannungssignal mit einem reduzierten Betriebszyklus, das in diesem Ausführungsbeispiel an die Pumpe (19) gesendet wird. Die Steuereinheit (40) ermöglicht, dass der Warmwasserbereiter (1) mit reduzierter Leistung in Bezug auf die erste Betriebsstellung läuft. Somit ist vorgesehen, dass die Pumpe (19) teilweise abgebremst wird. Zum Beispiel kann die Pumpe (19) im ersten Fall mit einer Leistung von 60 W betrieben werden, im zweiten Fall kann die von ihr betriebene Leistung durch das PWM-Signal auf einen Wert von 15 W bis 20 W reduziert werden.

Die Steuereinheit (40) ermöglicht es der Heizeinheit (16), auf ähnliche Weise mit einem zweiten Startsignal mit reduzierter Leistung relativ zu dem ersten Fall zu laufen. In dieser beispielhaften Ausführungsform sendet die Steuereinheit (40) einen Befehl an die Heizeinheit, der das Gas zumindest teilweise einschränkt. In einer möglichen Ausführungsform sendet die Steuereinheit (40) ein Pulsweitenmodulationssignal (PWM-Signal) mit einem reduzierten Betriebszyklus (im Vergleich zum ersten Fall) an die Wärmequelle (16) als das zweite Ansteuersignal.

Die Steuereinheit (40) weist das Umlenkventil (18) an, von der ersten Betriebsstellung (181) in die zweite Betriebsstellung (182) zu wechseln, nachdem die Betriebsleistung der Pumpe (19)/Heizeinheit (10) reduziert wurde. In einer möglichen Ausführungsform wartet die Steuereinheit (40) für einen bestimmten Zeitraum und weist das Umlenkventil (18) an, von der ersten Betriebsstellung (181) in die zweite Betriebsstellung (182) zu wechseln, nachdem die Betriebsleistung der Pumpe (19)/Heizeinheit (10) reduziert wurde.

Die Steuereinheit (40) erhöht die Betriebsleistung der Pumpe (19), nachdem das Umschalten des Umlenkventils (18) von der ersten Betriebsstellung (181) in die zweite Betriebsstellung (182) abgeschlossen ist. Die Steuereinheit (40) erhöht auch die Betriebsleistung der Heizeinheit (10). Die Betriebskräfte der Pumpe (19) und der Heizeinheit (10) werden mit vorbestimmten Leistungswerten betrieben, die für den Haushaltsgebrauch geeignet sind. Wenn beispielsweise die Pumpe (19) mit einer Leistung von 15 bis 20 W betrieben wird, wird eine Leistung von 60 W gestartet.

In einer möglichen Ausführungsform stellt die Steuereinheit (40) sicher, dass die Pumpe (19) nach Empfang des Warmwasserbedarfssignals mit einer allmählich abnehmenden Leistung arbeitet. In dieser beispielhaften Ausführungsform ermöglicht die Steuereinheit (40), dass die Pumpe (19) durch ein Pulsweitenmodulationssignal (PWM-Signal) mit reduziertem Betriebszyklus angetrieben wird. In ähnlicher Weise ist auch vorgesehen, dass die Heizeinheit (10) mit schrittweise verringerter Leistung angetrieben wird. In einem anderen Ausführungsbeispiel wird die Leistung der Pumpe (19) und der Heizeinheit (10) schrittweise erhöht, wenn ein Übergang von der ersten Betriebsstellung (181) in die zweite Betriebsstellung (182) oder umgekehrt abgeschlossen ist.

Ähnlich wie oben wird die Betriebsleistung der Pumpe (19) und der Heizeinheit (10) durch die Steuereinheit (40) reduziert, wenn wird bestimmt, dass kein Warmwasserbedarf besteht, wodurch das Umlenkventil (18) von der zweiten Betriebsstellung (182) in die erste Betriebsstellung (181) gelangen kann. Und die Leistungskraft der Pumpe (19) und der Heizeinheit (16) wird wieder auf die für die Zentralheizung ausgewählten Werte erhöht.

Die von der Steuereinheit (40) durchgeführten Vorgänge werden im Speicher des Mikroprozessors oder in einer separaten Speichereinheit als Befehlszeilen gespeichert.

Im Stand der Technik bleiben die Pumpe (19) und die Heizeinheit (10) von dem Zeitpunkt, an dem das Warmwasseranforderungssignal empfangen wird, bis zu dem Zeitpunkt, an dem das Umlenkventil (18) in die zweite Betriebsstellung (182) übergeht, geschlossen. Da sich das Wasser in der zentralen Heizungsleitung (20) während dieser Dauer abkühlt, wird der erste Teil des Wassers, der während des häuslichen Gebrauchs zu dem Benutzer gelangt, teilweise gekühlt und die Strömungsrate ist teilweise niedrig. Dank der Erfindung werden die Pumpe (19) und die Heizeinheit (10) über den oben genannten Zeitraum mit niedriger Leistung betrieben. Im Gegensatz zum Stand der Technik wird der Komfort des Benutzers erhöht, indem dem Benutzer ein schnellerer Zugang zu heißem Wasser für den Hausgebrauch ermöglicht wird, das teilweise mehr erhitzt wird und näher an der gewünschten Strömungsrate liegt. Außerdem können die Strömungsrate und die Temperatur nach dem Umschalten der Stellung schrittweise erhöht werden und der Benutzer wird vor Temperatur- oder Strömungsänderung geschützt.

Der Schutzumfang der Erfindung ist in den beigefügten Ansprüchen dargelegt und kann keineswegs auf die in der ausführlichen Beschreibung gegebenen Beispiele beschränkt werden. Es ist ersichtlich, dass ein Fachmann im Hinblick auf das Vorstehende ähnliche Ausführungsformen erstellen kann, ohne vom Hauptgegenstand der Erfindung abzuweichen.

### IN DER FIGUREN VERWENDETE REFERENZNUMMERN

1 Warmwasserbereiter
10 Heizeinheit
12 Wärmetauscher
18 Umlenkventil
181 Erste Betriebsstellung
182 Zweite Betriebsstellung
19 Pumpe
20 Zentrale Heizleitung
22 Heißwasserauslassabschnitt
24 Rückführungsteil
28 Wärmeübertragungsarm
30 Haushaltsgebrauchsleitung
40 Steuereinheit
42 Sensor
50 Zentralheizungskomponente

## Patentansprüche

1. Warmwasserbereiter (1), umfassend: eine Heizeinheit (10) zum Heizen einer der mindestens einen Zentralheizungskomponente (50) zugeordneten Zentralheizungsleitung (20); einen Wärmeübertragungsarm (28), der einen Heißwasserauslassabschnitt (22) der Heizleitung (20) aus der Heizeinheit (10) und einen Rückführungsteil (24), der von der Zentralheizungskomponente (50) in die Heizeinheit (10) eintritt, verbindet, um einen Wasserdurchgang zu ermöglichen; einen Wärmetauscher (12) zum Bereitstellen einer Wärmeübertragung zwischen dem Wärmeübertragungsarm (28) und einer Haushaltsgebrauchsleitung (30); ein Umlenkventil (18), das angeordnet ist, um in einer zweiten Betriebsstellung (182) betrieben zu werden, in der Wasser zwischen der Heizeinheit (10) und dem Wärmetauscher (12) zirkuliert und in einer ersten Betriebsstellung (181) betrieben zu werden, in der Wasser zwischen der Heizeinheit (10) und den Zentralheizkomponenten (50) zirkuliert; eine Pumpe (19) zum Strömen von Wasser aus der Zentralheizungsleitung (20) und eine Steuereinheit (40), die angeordnet ist, um die Heizeinheit (10), die Pumpe (19) und das Umlenkventil (18) in Bezug auf ein Heißwasseranforderungssignal zu steuern, das von einem Sensor (42) empfangen wird, das System ist **dadurch gekennzeichnet, dass** die Steuereinheit (40) so konfiguriert ist, dass die Pumpe mit einer geringeren Leistung für die Zeitdauer, in der die Steuereinheit das Warmwasseranforderungssignal empfängt und das Umlenkventil (18) in die zweite Betriebsstellung (182) übergeht, (19) läuft.

2. Warmwasserbereiter (1) nach Anspruch 1, der **dadurch gekennzeichnet ist, dass** die Steuereinheit (40) ferner konfiguriert ist, um zu ermöglichen, dass die Heizeinheit (16) mit einer niedrigeren Leistung angetrieben wird, während das Umlenkventil (18) in die zweite Betriebsstellung (182) übergeht nach dem Erhalten des Warmwasseranforderungssignals.

3. Warmwasserbereiter (1) nach Anspruch 1 oder 2, der **dadurch gekennzeichnet ist, dass** die Steuereinheit (40) konfiguriert ist, um eine Leistungsreduzierung mit einem PWM-Signal (Pulsweitenmodulation) oder einem Spannungssignal durchzuführen.

4. Warmwasserbereiter (1) nach einem der vorhergehenden Ansprüche, der **dadurch gekennzeichnet ist, dass** die Steuereinheit (40) dazu eingerichtet ist, die Pumpe (19) und/oder die Heizeinheit (10) mit einer schrittweise abnehmenden Kraft anzutreiben.

5. Warmwasserbereiter (1) nach einem der Ansprüche 1 bis 3, der **dadurch gekennzeichnet ist, dass** die Steuereinheit (40) dazu eingerichtet ist, die Pumpe (19) und/oder die Heizeinheit (10) mit einer gleichbleibenden Kraft anzutreiben.

6. Warmwasserbereiter (1) nach einem der vorhergehenden Ansprüche, der **dadurch gekennzeichnet ist, dass** die Steuereinheit (40) konfiguriert ist, um das Umlenkventil (18) nach einer bestimmten Zeit nach dem Start des Leistungsreduzierungsprozesses von der ersten Betriebsstellung (181) in die zweite Betriebsstellung (182) zu bringen.

7. Warmwasserbereiter (1) nach einem der vorhergehenden Ansprüche, der **dadurch gekennzeichnet ist, dass** der Warmwasserbereiter (1) ein Haushaltskombigerät ist.

8. Warmwasserbereiter (1) nach einem der vorhergehenden Ansprüche, der **dadurch gekennzeichnet ist, dass** die Steuereinheit (40) dazu eingerichtet ist, die Pumpe (19) und/oder die Heizeinheit (10) mit einer sich erhöhenden Kraft anzutreiben.

9. Warmwasserbereiter (1) nach Anspruch 8, der **dadurch gekennzeichnet ist, dass** die Steuereinheit (40) dazu eingerichtet ist, die Pumpe (19) und/oder die Heizeinheit (10) mit einer sich schrittweise erhöhenden Kraft anzutreiben.

## Claims

1. Water heater (1) comprising: a heating unit (10) for heating a central heating line (20) assigned to the at least one central heating component (50); a heat transfer arm (28) connecting a hot water outlet portion (22) of the heating line (20) from the heating unit (10) and a return part (24) entering the heating unit (10) from the central heating component (50), in order to allow water to pass through; a heat exchanger (12) for providing heat transfer between the heat transfer arm (28) and a domestic utility line (30); a diverter valve (18) arranged to be operated in a second operating position (182) in which water circulates between the heating unit (10) and the heat exchanger (12) and to be operated in a first operating position (181) in which water circulates between the heating unit (10) and the central heating components (50); a pump (19) for delivering a flow of water from the central heating line (20), and a control unit (40) which is arranged to control the heating unit (10), the pump (19) and the diverter valve (18) with respect to a hot water request signal, which is received by a sensor (42), the system being **characterized in that** the control unit (40) is configured such that the pump runs with a lower power for the period in which the control unit receives the hot water request signal and the diverter valve (18) (19) transitions to the second operating position (182).

2. Water heater (1) according to Claim 1, **characterized in that** the control unit (40) is further configured to allow the heating unit (16) to be driven at a lower power while the diverter valve (18) transitions to the second operating position (182) after receiving the hot water request signal.

3. Water heater (1) according to Claim 1 or 2, **characterized in that** the control unit (40) is configured to perform a power reduction with a PWM (pulse width modulation) signal or a voltage signal.

4. Water heater (1) according to one of the preceding claims, **characterized in that** the control unit (40) is arranged to drive the pump (19) and/or the heating unit (10) with a gradually decreasing force.

5. Water heater (1) according to one of Claims 1 to 3, **characterized in that** the control unit (40) is arranged to drive the pump (19) and/or the heating unit (10) with a constant force.

6. Water heater (1) according to one of the preceding claims, **characterized in that** the control unit (40) is configured to bring the diverter valve (18) from the first operating position (181) to the second operating position (182) after a certain time following the start of the power reduction process.

7. Water heater (1) according to one of the preceding claims, **characterized in that** the water heater (1) is a domestic combination appliance.

8. Water heater (1) according to one of the preceding claims, **characterized in that** the control unit (40) is arranged to drive the pump (19) and/or the heating unit (10) with an increasing force.

9. Water heater (1) according to Claim 8, **characterized in that** the control unit (40) is arranged to drive the pump (19) and/or the heating unit (10) with a gradually increasing force.

## Revendications

1. Chauffe-eau (1), comprenant : une unité de chauffage (10) destinée à chauffer une conduite de chauffage central (20) associée à au moins un composant de chauffage central (50) ; une branche de transmission de chaleur (28) qui relie une portion de sortie d'eau chaude (22) de la conduite de chauffage (20) provenant de l'unité de chauffage (10) et une partie de retour (24) qui entre dans l'unité de chauffage (10) en venant du composant de chauffage central (50) afin de permettre un passage d'eau ; un échangeur thermique (12) destiné à fournir une transmission de chaleur entre la branche de transmission de chaleur (28) et une conduite d'usage domestique (30) ; une vanne de dérivation (18) qui est disposée pour fonctionner dans une deuxième position de fonctionnement (182) dans laquelle l'eau circule entre l'unité de chauffage (10) et l'échangeur thermique (12) et dans une première position de fonctionnement (181) dans laquelle l'eau circule entre l'unité de chauffage (10) et les composants de chauffage central (50) ; une pompe (19) destinée à faire couler l'eau à partir de la conduite de chauffage central (20) et une unité de commande (40) qui est disposée pour commander l'unité de chauffage (10), la pompe (19) et la vanne de dérivation (18) par rapport à un signal de demande d'eau chaude qui est reçu par un capteur (42),
le système étant **caractérisé en ce que** l'unité de commande (40) est configurée de telle sorte que la pompe tourne avec une puissance inférieure pendant la période de temps pendant laquelle l'unité de commande reçoit le signal de demande d'eau chaude et la vanne de dérivation (18) (19) passe à la deuxième position de fonctionnement (182).

2. Chauffe-eau (1) selon la revendication 1, **caractérisé en ce que** l'unité de commande (40) est en outre configurée pour permettre à l'unité de chauffage (16) d'être entraînée avec une puissance inférieure pendant que la vanne de dérivation (18) passe à la deuxième position de fonctionnement (182) après réception du signal de demande d'eau chaude.

3. Chauffe-eau (1) selon la revendication 1 ou 2, **caractérisé en ce que** l'unité de commande (40) est configurée pour effectuer une réduction de puissance à l'aide d'un signal PWM (modulation de largeur d'impulsion) ou d'un signal de tension.

4. Chauffe-eau (1) selon l'une quelconque des revendications précédentes, **caractérisé en ce que** l'unité de commande (40) est conçue pour entraîner la pompe (19) et/ou l'unité de chauffage (10) avec une force diminuant progressivement.

5. Chauffe-eau (1) selon l'une quelconque des revendications 1 à 3, **caractérisé en ce que** l'unité de commande (40) est conçue pour entraîner la pompe (19) et/ou l'unité de chauffage (10) avec une force constante.

6. Chauffe-eau (1) selon l'une quelconque des revendications précédentes, **caractérisé en ce que** l'unité de commande (40) est configurée pour transférer la vanne de dérivation (18) après un certain délai après le début du processus de réduction de puissance de la première position de fonctionnement (181) à la deuxième position de fonctionnement (182).

7. Chauffe-eau (1) selon l'une quelconque des revendications précédentes, **caractérisé en ce que** le chauffe-eau (1) est un appareil domestique combiné.

8. Chauffe-eau (1) selon l'une quelconque des revendications précédentes, **caractérisé en ce que** l'unité de commande (40) est conçue pour entraîner la pompe (19) et/ou l'unité de chauffage (10) avec une force croissante.

9. Chauffe-eau (1) selon la revendication 8, **caractérisé en ce que** l'unité de commande (40) est conçue pour entraîner la pompe (19) et/ou l'unité de chauffage (10) avec une force croissante progressivement.
